# EUROPÄISCHE PATENTSCHRIFT

(11) **EP 2 289 768 B1**
(45) Veröffentlichungstag und Bekanntmachung des Hinweises auf die Patenterteilung: **18.09.2013**
(21) Anmeldenummer: 10008355.9
(22) Anmeldetag: 11.08.2010
(51) Int. Cl.: B62D 15/02, G01S 13/93

(54) **Verfahren zum Unterstützen eines Fahrers eines Kraftfahrzeugs beim Einparken in eine Querparklücke, Fahrassistenzeinrichtung und Kraftfahrzeug mit einer Fahrerassistenzeinrichtung**
Method for supporting a driver of a motor vehicle when parking in a diagonal parking space, driver assistance device and motor vehicle with a driver assistance device
Procédé d'assistance d'un conducteur de véhicule automobile lors du stationnement dans une place de stationnement oblique, dispositif d'assistance du conducteur et véhicule automobile doté d'un dispositif d'assistance du conducteur

(30) Priorität: 27.08.2009 DE 102009039084
(43) Veröffentlichungstag der Anmeldung: 02.03.2011
(73) Patentinhaber: Valeo Schalter und Sensoren GmbH, 74321 Bietigheim-Bissingen (DE)
(72) Erfinder: Hoffsommer, Klaus, 74321 Bietigheim-Bissingen (DE); Grimm, Oliver, 74223 Flein (DE)

(56) Entgegenhaltungen:
- EP-A2- 1 249 379
- EP-A2- 2 081 167
- WO-A1-2006/092370
- DE-A1-102004 027 869
- DE-A1-102007 027 438
- JP-A- 2008 290 669

## Beschreibung

Die Erfindung betrifft ein Verfahren zum Unterstützen eines Fahrers eines Kraftfahrzeugs beim Einparken in eine Querparklücke mittels einer Fahrerassistenzeinrichtung. Es werden Umgebungsbedingungen des Kraftfahrzeugs durch eine Sensoreinrichtung der Fahrerassistenzeinrichtung erfasst, und eine durch das Kraftfahrzeug zumindest semi-autonom bzw. halbautomatisch zu befahrene Parkbahn wird abhängig von den Umgebungsbedingungen durch eine Steuereinrichtung der Fahrerassistenzeinrichtung bestimmt. Die Erfindung befasst sich auch mit einer Fahrerassistenzeinrichtung sowie mit einem Kraftfahrzeug mit einer Fahrerassistenzeinrichtung.

Es sind allgemein Fahrerassistenzeinrichtungen bekannt, die den Fahrer beim Einparken rückwärts in eine Querparklücke unterstützen. Eine solche Einrichtung ist zum Beispiel aus der Druckschrift DE 10 2006 052 575 A1 bekannt. Es wird eine Parklücke während einer Vorbeifahrt des Kraftfahrzeugs an selbiger Parklücke durch einen an einer Seitenflanke des Kraftfahrzeugs angebrachten Sensor erfasst. Dann wird eine Parkbahn für den Parkvorgang bestimmt, die das Kraftfahrzeug zum Erreichen einer Endposition in der Parklücke zu befahren hat.

Im Gegenstand gemäß Druckschrift DE 103 21 904 A1 wird ein Entfernungssensor an einer Seitenflanke eines Kraftfahrzeugs zur Überwachung von seitlichen Hindernissen eingesetzt. Das Kraftfahrzeug umfasst außerdem einen Wegsensor, mit welchem eine durch das Kraftfahrzeug zurückgelegte Wegstrecke erfasst werden kann. Die jeweils augenblickliche Position eines durch den Entfernungssensor einmal erfassten Hindernisses kann abhängig von der zurückgelegten Wegstrecke des Kraftfahrzeugs ausgerechnet werden. Die jeweils augenblickliche Position des Hindernisses relativ zum Kraftfahrzeug kann also auch dann erfasst werden, wenn sich das Hindernis nicht mehr im Erfassungsbereich des Entfernungssensors befindet.

Aus der EP 1 249 379 A2 ist ein Verfahren zum Unterstützen eines Fahrers eines Kraftfahrzeugs beim Einparken in eine Querparklücke bekannt. Dabei wird nach einer ersten fahrerseitigen Aktivierung die fahrzeugumgebung fortlaufend mittels Umgebungssensoren abgetastet, insbesondere mittels einem Laserscanner, die Position einer Parklücke in der Fahrzeugumgebung erfasst und Steuerinformationen zum Verbringen des Fahrzeugs in die Parklücke ermittelt. Nach einer zweiten fahrerseitigen Aktivierung wird das Fahrzeug dann anhand der Steuerinformationen fahrerunabhängig vorwärts oder rückwärts in die Parklücke eingeparkt. Das bekannte Verfahren setzt dabei allerdings verhältnismäßig aufwändige und teure Umgebungssensoren voraus, die einen Bereich vor bzw. hinter dem Fahrzeug abtasten und die Position der Parklücke bereits bei der Annäherung des Fahrzeugs an dieselbe erfassen.

Der nächstliegende Stand der Technik ist in der EP1249379A2 zu sehen.

Also sind aus dem Stand der Technik Fahrerassistenzsysteme bekannt, die den Fahrer bei unterschiedlichsten Fahrsituationen unterstützen. Jedoch sind im Stand der Technik die Möglichkeiten, den Fahrer bei speziellen Fahrmanövern zu unterstützen, noch nicht ausgeschöpft.

Es ist Aufgabe der Erfindung, eine Lösung aufzuzeigen, wie die Funktionalität von Fahrerassistenzeinrichtung in einem Kraftfahrzeug erweitert werden kann.

Diese.Aufgabe wird erfindungsgemäß durch ein Verfahren mit den Merkmalen gemäß Patentanspruch 1gelöst. Vorteilhafte Ausführungen der Erfindung sind Gegenstand der abhängigen Patentansprüche und der Beschreibung.

Bei einem erfindungsgemäßen Verfahren wird ein Fahrer eines Kraftfahrzeugs beim Einparken in eine Querparklücke mittels einer Fahrerassistenzeinrichtung unterstützt Es werden Umgebungsbedingungen des Kraftfahrzeugs durch eine Sensoreinrichtung der Fahrerassistenzeinrichtung erfasst. Eine durch das Kraftfahrzeug zumindest semi-autonom zu befahrene Parkbahn wird abhängig von den Umgebungsbedingungen durch eine Steuereinrichtung der Fahrerassistenzeinrichtung bestimmt. Das Kraftfahrzeug wird vorwärts in die Querparklücke eingeparkt, und beim Vorwärtseinparken wird die bestimmte Parkbahn durchfahren.

Erstmals erfolgt das Unterstützen des Fahrers eines Kraftfahrzeugs beim Vorwärtseinparken in eine Querparklücke. Das Unterstützen beinhaltet, dass abhängig. erfassten Umgebungsbedingungen des Kraftfahrzeugs eine durch das Kraftfahrzeug zumindest semi-autonom bzw. halbautomatisch zu befahrene Parkbahn durch die Fahrerassistenzeinrichtung bestimmt wird. Die Erfindung beruht somit auf der Erkenntnis, dass das Einparken vorwärts in eine Querparklücke eine sehr häufig stattfindende Parksituation darstellt. Die Erfindung geht nun den Weg, den Fahrer auch bei solchen Fahrsituationen durch Durchführen eines zumindest semi-autonomen Parkvorgangs zu unterstützen.

Bei einem semi-autonomen Parkvorgang ist es dem Fahrer zugeteilt, dass er Gas gibt und bremst. Ein Lenken und somit ein Einschlagen der lenkbaren Räder des Kraftfahrzeugs wird automatisch und somit fahrerunabhängig durchgeführt. Alternativ wird das Lenken durch den Fahrer durchgeführt, und die elektronische Fahrerassistenzeinrichtung informiert auf Grundlage einer von der Steuereinrichtung bestimmten Parkbahn den Fahrer durch akustisch und/oder optisch und/oder haptisch wahrnehmbare Signale, welche Lenkaktionen er auszuführen hat. Bei einem autonomen bzw. vollständig automatischen Parkvorgang kann die Fahrerassistenzeinrichtung zusätzlich noch in einen Antriebsstrang des Kraftfahrzeugs eingreifen; der Fahrer braucht nur noch, den Parkvorgang freizugeben und gegebenenfalls zu unterbrechen.

Unter einer Querparklücke wird vorliegend eine derartige seitlich zu einer Fahrbahn angrenzende Abstellfläche für ein Fahrzeug verstanden, deren Längsachse bzw. Haupterstreckungsachse in einem Winkel größer 0° und kleiner 180° zur Längsachse der Fahrbahn orientiert ist. Vorzugsweise werden diesbezüglich Abstellflächen verstanden, deren Längsachse in einem Winkel zwischen 30° und 150° zur Längsachse der Fahrbahn verläuft. Insbesondere seien als Parklücke derartige genannt, deren Längsachse in einem Winkel zwischen 80° und 100°, insbesondere in einem Winkel von 90°, also senkrecht zur Längsachse der Fahrbahn, orientiert ist.

Für das Unterstützen des Fahrers beim Vorwärtseinparken in die Querparklücke können unterschiedlichste Szenarien vorgesehen sein. Zum Beispiel kann der Fahrer beim gesamten Vorgang des Vorwärtseinparkens unterstützt werden. Alternativ kann der Fahrer lediglich in einem Abschnitt des Parkvorgangs unterstützt werden. Dann wird die Parkbahn lediglich für diesen Abschnitt bestimmt, und das Kraftfahrzeug wird in diesem Abschnitt zumindest semi-autonom geführt. Es wird bevorzugt durch die Steuereinrichtung überprüft, ob ein vorbestimmtes Aktivierungskriterium zum Starten des zumindest semi-autonomen Parkens erfüllt ist oder nicht. Das Unterstützen des Fahrers durch die Fahrerassistenzeinrichtung erfolgt bevorzugt dann, wenn das Aktivierungskriterium erfüllt ist.

Auch nach Erfülltsein des Aktivierungskriteriums können im Hinblick auf das Aktivieren des Unterstützens des Fahrers unterschiedlichste Szenarien vorgesehen sein. Nach Erfülltsein des Aktivierungskriteriums kann das Unterstützen des Fahrers nämlich unmittelbar automatisch - d.h. fahrerunabhängig - eingeleitet werden. Wird das Unterstützen des Fahrers automatisch aktiviert, so wird dem Fahrer bevorzugt die Möglichkeit gegeben, die Unterstützung durch die Fahrerassistenzeinrichtung zu deaktivieren. Greift die Fahrerassistenzeinrichtung in die Lenkung des Kraftfahrzeugs ein, so kann das Deaktivieren durch ein Gegenlenken durch den Fahrer erfolgen. Zusätzlich oder alternativ kann vorgesehen sein, dass der Fahrer die Unterstützung mit Hilfe eines Bedienelements deaktivieren kann.

Alternativ kann das Unterstützen des Fahrers beim Vorwärtseinparken dann aktiviert werden, wenn einerseits das Aktivierungskriterium erfüllt ist und andererseits der Fahrer das Unterstützen mit Hilfe einer Bedieneinrichtung freigibt. Dann empfängt die Steuereinrichtung ein Aktivierungssignal von der durch den Fahrer betätigten Bedieneinrichtung, und das Unterstützen des Fahrers durch die Fahrerassistenzeinrichtung erfolgt nach Empfangen dieses Aktivierungssignals und zusätzlich nach Erfülltsein des Aktivierungskriteriums.

Ist das Aktivierungskriterium zum Starten des zumindest semi-autonomen Parkens erfüllt, so kann die Steuereinrichtung auch ein Informationssignal erzeugen, mittels welchem der Fahrer über die Möglichkeit einer Aktivierung des Unterstützens durch die Fahrerassistenzeinrichtung informiert wird. Dieses Informationssignal kann z.B. eine Informationsanzeige an einer Anzeigeeinrichtung - z.B. an einem Bildschirm - erzeugen. Ergänzend oder alternativ kann mit dem Informationssignal eine akustische Ausgabeeinrichtung dazu angesteuert werden, den Fahrer auf akustischem Wege über die Möglichkeit einer Aktivierung der Fahrerassistenzeinrichtung zu informieren. Der Fahrer wird bei dieser Ausführungsform also auch dadurch unterstützt, dass er darüber informiert wird, dass die Unterstützung beim Vorwärtseinparken in die Querparklücke von Seiten der Fahrerassistenzeinrichtung überhaupt möglich ist oder nicht. Eine solche Vorgehensweise ist besonders benutzerfreundlich.

Also kann das Unterstützen des Fahrers beim Einparken in die Parklücke dann erfolgen, wenn das Aktivierungskriterium erfüllt ist. Dieses Aktivierungskriterium kann sich z.B. auf die durch die Sensoreinrichtung erfassten Umgebungsbedingungen und/oder auf zumindest einen Fahrparameter des Kraftfahrzeugs beziehen. In einer Ausführungsform wird/werden somit beim Überprüfen des Erfülltseins des Aktivierungskriteriums die erfassten Umgebungsbedingungen des Kraftfahrzeugs und/oder zumindest ein Fahrparameter des Kraftfahrzeugs berücksichtigt. Unter Berücksichtigung der Umgebungsbedingungen des Kraftfahrzeugs und/oder unter Berücksichtigung von Fahrparametern des Kraftfahrzeugs kann die Steuereinrichtung nämlich feststellen, ob das Unterstützen des Fahrers - wie z.B. das Bestimmen einer Parkbahn - überhaupt möglich ist oder nicht.

Als Fahrparameter kann/können z.B. die Geschwindigkeit des Kraftfahrzeugs und/oder seine Beschleunigung und/oder ein Lenkwinkel einer Lenkeinrichtung berücksichtigt werden. Das Aktivierungskriterium kann beinhalten, dass
- der momentane Wert der Geschwindigkeit des Kraftfahrzeugs in einem vorbestimmten Wertebereich, insbesondere unterhalb eines vorbestimmten Grenzwertes, liegt - dieser Grenzwert kann z.B. in einem Wertebereich von 10 km/h bis 30 km/h liegen; und/oder
- der momentane Wert der Beschleunigung des Kraftfahrzeugs in einem vorbestimmten Wertebereich, insbesondere unterhalb eines vorbestimmten Grenzwertes, liegt; und/oder
- der Lenkwinkel der Lenkeinrichtung des Kraftfahrzeugs eine vorbestimmte Lenkwinkeländerung durchläuft und/oder der momentane Lenkwinkel in einem vorbestimmten Lenkwinkelbereich liegt.

Durchläuft der Lenkwinkel eine vorbestimmte Lenkwinkeländerung, so kann dies ein Zeichen dafür sein, dass ein Parkmanöver bevorsteht. Dies kann durch die Steuereinrichtung erkannt werden, und die Steuereinrichtung kann nach Erkennen eines bevorstehenden Parkmanövers die Unterstützung dem Fahrer anbieten oder selbige aktivieren.

Ist die Querparklücke an zwei sich gegenüber liegenden Seiten jeweils durch eine Begrenzung unmittelbar begrenzt, so kann das Aktivierungskriterium ergänzend oder alternativ beinhalten, dass zumindest eine der Begrenzungen der Querparklücke durch die Sensoreinrichtung erfasst wird. Liegt eine der Begrenzungen der Querparklücke in einem Erfassungsbereich der Sensoreinrichtung, so kann die Unterstützung durch die Fahrerassistenzeinrichtung dem Fahrer angeboten oder unmittelbar eingeleitet werden. Wird zumindest eine der Begrenzungen durch die Sensoreinrichtung erfasst, so ist auch die Position der Querparklücke relativ zum Kraftfahrzeug bekannt. Mit der bekannten Position der Parklücke kann die Steuereinrichtung eine optimale Parkbahn für das Kraftfahrzeug bestimmen.

Ergänzend oder alternativ kann das Aktivierungskriterium beinhalten, dass sich beim Vorwärtseinparken, insbesondere zu Beginn des Vorwärtseinparkens, das Kraftfahrzeug durch den Fahrer gesteuert in Richtung zur Querparklücke hin bewegt und/oder sich in einem Abstand kleiner als ein vorbestimmter Abstandswert von der Querparklücke befindet. Bewegt sich das Kraftfahrzeug durch den Fahrer gelenkt - also unabhängig von der Fahrerassistenzeinrichtung bzw. weder semi-autonom noch autonom - in Richtung der Querparklücke hin, so stellt dies ein Zeichen dafür dar, dass der Fahrer einzuparken vorhat. Eine solche Situation kann durch die Steuereinrichtung - wenn die Position der Querparklücke relativ zum Kraftfahrzeug bekannt ist - erkannt werden. Nach Erkennen einer solchen Situation kann die Steuereinrichtung die Unterstützung dem Fahrer anbieten oder selbige sofort aktivieren. Beim Überprüfen des Erfülltseins des Aktivierungskriteriums kann auch der aktuelle Abstand zwischen der Querparklücke und dem Kraftfahrzeug berücksichtigt werden. Unterschreitet dieser Abstand den vorbestimmten Abstandswert, so kann das Aktivierungskriterium erfüllt sein. Dieser vorbestimmte Abstandswert kann z.B. in einem Wertebereich von 0 m bis 3 m, bevorzugt in einem Wertebereich von 0 m bis 1 m liegen.

Das Aktivierungskriterium kann also abhängig von Erfassungsbereichen der Sensoreinrichtung bzw. von der Anzahl von Sensoren der Sensoreinrichtung und/oder von deren Anordnung am Kraftfahrzeug konzipiert werden. Die Sensoreinrichtung umfasst zwei Sensoren, einen an der linken Seitenflanke und einen an der rechten Seitenflanke des Kraftfahrzeugs, deren Haupterfassungsrichtungen in Fahrzeugquerrichtung orientiert sind, so wird das Unterstützen des Fahrers beim Vorwärtseinparken dann angeboten oder aktiviert wenn sich das Kraftfahrzeug zumindest bereichsweise bereits in der Parklücke befindet.

Das Verfahren kann z.B. in einem solchen Ablauf verwirklicht werden: Die Sensoreinrichtung umfasst zwei Ultraschallsensoren, einen an der linken Seitenflanke und einen an der rechten Seitenflanke des Kraftfahrzeugs. Die Erfassungsbereiche bzw. die Erfassungsrichtungen der Ultraschallsensoren sind in Fahrzeugquerrichtung orientiert. Die Ultraschallsensoren sind jeweils im vorderen Bereich des Kraftfahrzeugs, z.B. an einem vorderen Stoßfänger oder im Bereich der Außenspiegel, angebracht. Das Kraftfahrzeug befindet sich auf einer Fahrbahn, der Fahrer fährt geradeaus, nämlich auf einer rechten Spur der Fahrbahn. Links von der Fahrbahn befinden sich eine Vielzahl von Querparklücken, nämlich solche Parklücken, deren Längsachsen senkrecht zur Fahrbahn orientiert sind. Der Fahrer will das Kraftfahrzeug in eine der Querparklücken einparken, nämlich vorwärts. Der Fahrer reduziert die Geschwindigkeit des Kraftfahrzeugs auf eine Geschwindigkeit kleiner 10 km/h. Die Steuereinrichtung der Fahrerassistenzeinrichtung empfängt Signale von einer Tachoeinrichtung des Kraftfahrzeugs, die die Steuereinrichtung über die aktuelle Geschwindigkeit des Kraftfahrzeugs informieren. Die Steuereinrichtung erkennt nun, dass sich das Kraftfahrzeug mit Schrittgeschwindigkeit bewegt. Der Fahrer steuert nun das Kraftfahrzeug mit Hilfe des Lenkrades nach links, um in eine Querparklücke einzufahren. Gelangt der vordere Stoßfänger des Kraftfahrzeugs in die Querparklücke, so befinden sich die seitlich stehenden und die Querparklücke unmittelbar begrenzenden Kraftfahrzeuge in den jeweiligen Erfassungsbereichen der Ultraschallsensoren. Die Steuereinrichtung, die Messwerte für die durch die Ultraschallsensoren gemessenen jeweiligen Entfernungen empfängt, erkennt, dass sich das Kraftfahrzeug bereits bereichsweise in der Querparklücke befindet. Die Steuereinrichtung kennt sogar die jeweils momentane Position des Kraftfahrzeugs in der Querparklücke, nämlich abhängig von sowohl den aktuellen als auch den zuvor erfassten Messwerten der Ultraschallsensoren. Die Steuereinrichtung bestimmt nun eine Parkbahn, die durch das Kraftfahrzeug zum Erreichen einer Endposition in der Querparklücke durchfahren werden muss. Die Steuereinrichtung sendet Steuersignale an eine Lenkeinrichtung des Kraftfahrzeugs und greift somit in die Lenkung des Kraftfahrzeugs automatisch ein. Der Fahrer muss lediglich Gas geben und bremsen. Der Fahrer kann auch die Unterstützung durch die Fahrerassistenzeinrichtung ausschalten, nämlich z.B. durch ein Gegenlenken des Lenkrades. Die Steuereinrichtung kann die Parkbahn für das Kraftfahrzeug vorbestimmen. Die Parkbahn kann auch durch die Steuereinrichtung geregelt werden, nämlich derart, dass der Abstand zwischen dem linken Ultraschallsensor und dem links der Parklücke stehenden Kraftfahrzeug jeweils gleich dem Abstand zwischen dem rechten Ultraschallsensor und dem rechts der Parklücke stehenden Kraftfahrzeug ist.

Zusätzlich oder alternativ kann das Aktivierungskriterium beinhalten, dass das Kraftfahrzeug bereits vollständig in der Parklücke eingeparkt ist. Der Fahrer kann dann durch die Fahrerassistenzeinrichtung beim Vornehmen einer Korrektur der Position des Kraftfahrzeugs in der Querparklücke unterstützt werden. Dies kann z.B. so aussehen, dass das Kraftfahrzeug zumindest semi-autonom aus der Querparklücke zunächst ausgefahren und dann wieder entlang einer bestimmten Parkbahn eingeparkt wird. Dies ist besonders benutzerfreundlich, denn der Fahrer kann mit dem Kraftfahrzeug in die Parklücke einfahren, ohne sich um eine vernünftige Endposition des Kraftfahrzeugs in der Parklücke kümmern zu müssen. Die endgültige Position des Kraftfahrzeugs in der Parklücke wird mit Hilfe der Fahrerassistenzeinrichtung eingenommen.

Wie bereits ausgeführt, kann die Steuereinrichtung seitlich am Kraftfahrzeug angebrachte Ultraschallsensoren aufweisen. Dann gelingt es, die Parklücke begrenzende Objekte zu erfassen und somit die Parklücke selbst bezüglich des Kraftfahrzeugs zu orten. Die Sensoreinrichtung kann auch derart konzipiert werden, dass sie an einem Boden angebrachte Markierungen - wie z.B. weiße Streifen - erfassen kann. Dann kann der Fahrer auch beim Einparken in eine seitlich jeweils durch eine am Boden angebrachte Markierung begrenzte Querparklücke unterstützt werden. Sensoren, die die am Boden angebrachten Markierungen erfassen können, können z.B. optische Sensoren, Kameras und ähnliches sein.

Die Bestimmung der Parkbahn erfolgt abhängig von den durch die Sensoreinrichtung erfassten Umgebungsbedingungen. Das Erfassen der Umgebungsbedingungen kann beinhalten, dass eine Position der Begrenzungen der Querparklücke bzw. eine Position der Querparklücke relativ zum Kraftfahrzeug und/oder zumindest eine Abmessung der Querparklücke erfasst wird/werden. Die Parkbahn kann also abhängig von der Position der Querparklücke relativ zum Kraftfahrzeug und/oder abhängig von zumindest einer Abmessung der Querparklücke bestimmt werden. Z.B. kann durch die Sensoreinrichtung ein Abstand zwischen zwei seitlichen Begrenzungen der Querparklücke als ihre Breite erfasst werden, und abhängig von dieser Breite kann dann die Parkbahn durch die Steuereinrichtung bestimmt werden.

Die Steuereinrichtung kann die Parkbahn derart bestimmen, dass in einer Endposition des Kraftfahrzeugs in der Querparklücke zumindest ein vorbestimmter Punkt, insbesondere jegliche Punkte, einer in Fahrzeuglängsrichtung zentral verlaufenden Mittellängsachse des Kraftfahrzeugs einen gleichen Abstand zu den Begrenzungen der Parklücke aufweist/aufweisen. Somit wird das Kraftfahrzeug mittig in die Parklücke eingeparkt, selbst dann, wenn die seitlich stehenden und die Querparklücke begrenzenden Fahrzeuge schräg in den jeweiligen Parklücken stehen. Der Fahrer hat somit sowohl links als auch rechts des Kraftfahrzeugs genügend Platz, um gegebenenfalls alle Türen des Kraftfahrzeugs zu öffnen.

Bei der Bestimmung der Parkbahn sind unterschiedliche Ausführungsformen vorgesehen. Das Bestimmen der Parkbahn kann beinhalten, dass zumindest während einer vorbestimmten Zeitdauer während des Parkvorgangs die Parkbahn durch die Steuereinrichtung geregelt wird. Diese Regelung erfolgt bevorzugt im Hinblick darauf, dass das Kraftfahrzeug mittig in die Parklücke eingeparkt wird bzw. dass zumindest ein Punkt der in Fahrzeuglängsrichtung zentral verlaufenden Mittellängsachse des Kraftfahrzeugs einen gleichen Abstand zu den Begrenzungen der Parklücke aufweist. Die Parkbahn wird durch die Steuereinrichtung insbesondere dann geregelt, wenn an den Seitenflanken des Kraftfahrzeugs jeweils lediglich ein Sensor, z.B. ein Ultraschallsensor, angebracht ist. Dann kann die Sensoreinrichtung nämlich die Querparklücke erst dann erfassen, wenn sich das Kraftfahrzeug bereichsweise in der Querparklücke befindet. Erst dann kann die Bestimmung der Parkbahn erfolgen. Umfasst die Sensoreinrichtung zwei jeweils an einer Seitenflanke des Kraftfahrzeugs angebrachte Sensoren, so kann die Parkbahn im einfachsten Fall derart geregelt werden, dass die Abstände der beiden Sensoren zu den jeweiligen Begrenzungen der Querparklücke jeweils gleich sind. Bei dieser Ausführungsform kann das Unterstützen des Fahrers beim Vorwärtseinparken in eine Querparklücke mit einfachsten Mitteln erfolgen, nämlich mit Hilfe lediglich zweier Sensoren.

Ergänzend oder alternativ kann das Bestimmen der Parkbahn beinhalten, dass zumindest ein Abschnitt der Parkbahn vorab bestimmt wird. Die Länge dieses Abschnittes, welcher durch die Steuereinrichtung vorab berechnet werden kann, hängt bevorzugt von einem Erfassungsbereich der Sensoreinrichtung ab. Je nach dem, welchen Bereich der Umgebung des Kraftfahrzeugs die Sensoreinrichtung erfassen kann bzw. je nach Ausgestaltung der Sensoreinrichtung kann jeweils ein Parkbahn-Abschnitt unterschiedlicher Länge vorab bestimmt werden. Die Länge dieses Abschnittes kann auch davon abhängig gemacht werden, ob das Kraftfahrzeug an der Querparklücke bereits vorbei gefahren ist - was beim Vorwärtseinparken eher selten der Fall ist. Erfasst die Sensoreinrichtung einen seitlichen Bereich des Kraftfahrzeugs und fährt das Kraftfahrzeug an der Querparklücke vorbei, so kann auch die Parkbahn für den gesamten Parkvorgang vorab bestimmt werden. Dies setzt voraus, dass die Position der Querparklücke relativ zum Kraftfahrzeug sowie ihre Breite in der Steuereinrichtung der Fahrerassistenzeinrichtung bekannt sind. Das Vorabbestimmen der Parkbahn hat gegenüber einer Regelung der Parkbahn den Vorteil, dass bei einem semi-autonomen Parkvorgang das Lenkrad gleichmäßig gelenkt wird, ohne sprunghaft bewegt werden zu müssen.

Abhängig von den erfassten Umgebungsbedingungen, insbesondere abhängig von einer Breite der Querparklücke, kann die Parkbahn derart bestimmt werden, dass das Kraftfahrzeug möglichst in einem einzigen Zug in die Parklücke eingeparkt wird. Ist ein einzügiges Einparken aufgrund der Position des Kraftfahrzeugs relativ zur Parklücke und/oder aufgrund einer zu geringen Breite der Parklücke nicht möglich, so können auch weitere Züge, nämlich ein zweiter Zug rückwärts und ein dritter Zug vorwärts, vorgesehen sein. Somit wird erreicht, dass das Kraftfahrzeug auch bei relativ ungünstigen Umgebungsbedingungen eingeparkt werden kann.

Bei der Bestimmung der Parkbahn, insbesondere bei einer Regelung der Parkbahn, können sowohl die jeweils momentanen Messwerte der Sensoreinrichtung als auch die Messwerte vorheriger Messvorgänge berücksichtigt werden. Es wird somit möglich, die jeweils momentane Position des Kraftfahrzeugs in der Parklücke zu erfassen. Diese Ausführungsform erweist sich insbesondere bei einer solchen Sensoreinrichtung als besonders vorteilhaft, die die seitlichen Bereiche des Kraftfahrzeugs erfassen kann, nämlich z.B. mit Hilfe zweier Ultraschallsensoren. Gelangen die Sensoren in die Parklücke - die Position der Sensoren am Kraftfahrzeug ist bekannt -, so ist die Position des Kraftfahrzeugs in der Parklücke bekannt. Bewegt sich das Kraftfahrzeug tiefer in die Parklücke hinein, so kann anhand der seitlichen Verläufe der Messwerte der Sensoren die jeweils augenblickliche Position des Kraftfahrzeugs in der Parklücke berechnet werden.

Bezüglich der Ausgestaltung der Sensoreinrichtung kann diese zum Beispiel zumindest einen Ultraschallsensor und/oder zumindest ein Radargerät und/oder zumindest einen optischen Sensor und/oder zumindest eine Kamera umfassen. Die Sensoreinrichtung kann einen Bereich links vom Kraftfahrzeug und/oder einen Bereich rechts vom Kraftfahrzeug und/oder einen Bereich vor dem Kraftfahrzeug und/oder einen Bereich hinter dem Kraftfahrzeug erfassen. Zum Beispiel kann die Sensoreinrichtung zwei jeweils an einer Seitenflanke des Kraftfahrzeugs angeordnete Ultraschallsensoren aufweisen; dann wird eine Regelung der Parkbahn beim Durchführen des zumindest semi-autonomen Parkvorgangs ermöglicht.

Weitere Vorteile der Erfindung ergeben sich aus den Ansprüchen, den Figuren und der Figurenbeschreibung. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder auch in Alleinstellung verwendbar.

Die Erfindung wird nun anhand einzelner bevorzugter Ausführungsbeispiele sowie unter Bezugnahme auf die Zeichnungen näher erläutert. Es zeigen:
- Fig. 1: in schematischer Darstellung eine Draufsicht auf eine schrittweise gezeigte Parksituation, wobei sich ein Kraftfahrzeug durch einen Fahrer gesteuert in Richtung zu einer Querparklücke hin bewegt;
- Fig. 2: in schematischer Darstellung eine Draufsicht auf die Parksituation gemäß Fig. 1, wobei eine Fahrerassistenzeinrichtung des Kraftfahrzeugs in eine Lenkeinrichtung des Kraftfahrzeugs eingreift;
- Fig. 3: in schematischer Darstellung eine Draufsicht auf die Parksituation, wobei sich das Kraftfahrzeug in einer Endposition in der Querparklücke befindet; und
- Fig. 4: in schematischer Darstellung eine Draufsicht auf eine schrittweise gezeigte Parksituation, wobei das Kraftfahrzeug vorwärts in eine an zwei sich gegenüber liegenden Seiten jeweils durch eine am Boden angebrachte Markierung unmittelbar begrenzte Parklücke eingeparkt wird.

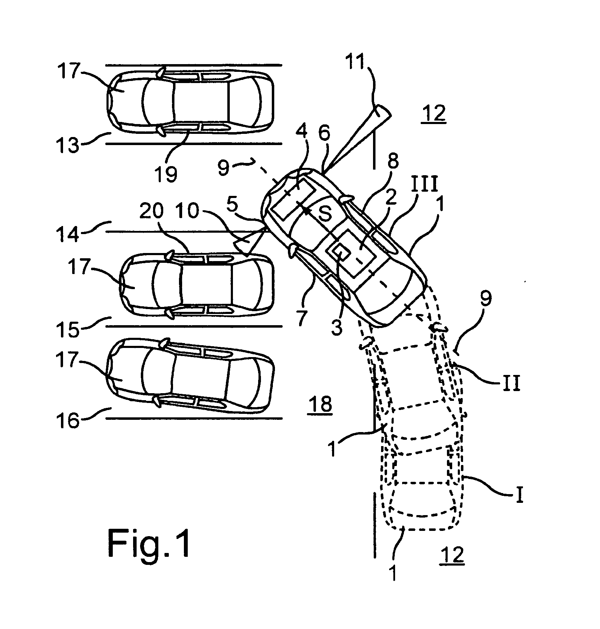

Ein in Fig. 1 schematisch dargestelltes Kraftfahrzeug 1 gemäß einer Ausführungsform der Erfindung ist ein Personenkraftwagen. Das Kraftfahrzeug 1 umfasst eine Fahrerassistenzeinrichtung, die einen Fahrer des Kraftfahrzeugs 1 beim Vorwärtseinparken unterstützen kann. Die Fahrerassistenzeinrichtung ist zum Durchführen eines zumindest semi-autonomen Parkvorgangs ausgebildet, sie kann die lenkbaren Räder des Kraftfahrzeugs 1 lenken.

Die Fahrerassistenzeinrichtung umfasst eine Steuereinrichtung 2 mit einem Mikrocontroller 3. Die Steuereinrichtung 2 kann Steuersignale S an eine Lenkeinrichtung 4 des Kraftfahrzeugs 1 ausgeben. Unter Ausgabe der Steuersignale S kann die Steuereinrichtung 2 die lenkbaren Räder des Kraftfahrzeugs 1 beliebig lenken. Es kann auch vorgesehen sein, dass die Steuereinrichtung 2 weitere Steuersignale an einen Antriebsstrang des Kraftfahrzeugs 1 senden kann. Dann kann die Steuereinrichtung 2 einen autonomen bzw. vollständig automatischen Parkvorgang durchführen. Im Ausführungsbeispiel wird jedoch lediglich von einem semi-autonomen Parkvorgang ausgegangen.

Die Fahrerassistenzeinrichtung umfasst außerdem einen ersten Ultraschallsensor 5 sowie einen zweiten Ultraschallsensor 6. Der erste Ultraschallsensor 5 ist an einer linken Seitenflanke 7 des Kraftfahrzeugs 1 in seinem vorderen Bereich angeordnet, nämlich in Fahrzeuglängsrichtung etwa mittig der Motorhaube. Z.B. kann der erste Ultraschallsensor am Rande eines vorderen Stoßfängers des Kraftfahrzeugs 1 angeordnet sein. Der zweite Ultraschallsensor 6 ist an einer rechten Seitenflanke 8 des Kraftfahrzeugs 1 angeordnet, und zwar spiegelsymmetrisch zum ersten Ultraschallsensor 5 bezüglich einer in Fahrzeuglängsrichtung zentral verlaufenden Mittellängsachse 9.

Der erste Ultraschallsensor 5 weist einen Erfassungsbereich 10 auf, eine Haupterfassungsrichtung des ersten Ultraschallsensors 5 ist in Fahrzeugquerrichtung orientiert. Ein Öffnungswinkel des Erfassungsbereichs 10 kann z.B. in einem Wertebereich von 5° bis 20° liegen. Der Öffnungswinkel des Erfassungsbereichs 10 beträgt im Ausführungsbeispiel 10°. Entsprechend weist der zweite Ultraschallsensor 6 einen Erfassungsbereich 11 auf, dessen Haupterfassungsrichtung in Fahrzeugquerrichtung orientiert ist. Der Erfassungsbereich 11 des zweiten Ultraschallsensors 6 ist spiegelsymmetrisch zum Erfassungsbereich 10 des ersten Ultraschallsensors 5, nämlich bezüglich der Mittellängsachse 9.

Nachfolgend wird ein Verfahren gemäß einer Ausführungsform der Erfindung mit weiterem Bezug auf Fig. 1 näher erläutert. Das Kraftfahrzeug 1 befindet sich zunächst in einer ersten Position I (die unterste Position in Fig. 1). Das Kraftfahrzeug fährt auf einer rechten Spur 12 einer Straße. Links der Straße befinden sich eine Vielzahl von Querparklücken 13, 14, 15, 16. Die Längsachsen der Querparklücken 13 bis 16 sind senkrecht zur Straße orientiert, d.h. die Längsachsen der Querparklücken 13 bis 16 schließen mit einer Längsachse der Straße einen Winkel von 90° ein.

In den Parklücken 13, 15, 16 befinden sich jeweils ein Kraftfahrzeug 17. Die Parklücke 14 ist noch frei und zur Beparkung möglich. Der Fahrer - das Kraftfahrzeug 1 befindet sich noch in der ersten Position I - erkennt die Parklücke 14 und entscheidet sich, mit dem Kraftfahrzeug 1 in die Querparklücke 14 einzuparken, nämlich vorwärts. Der Fahrer beginnt, das Kraftfahrzeug 1 in die Parklücke 14 zu steuern, und zwar noch ohne die Hilfe der Fahrerassistenzeinrichtung. Nach einem Augenblick befindet sich das Kraftfahrzeug 1 in einer weiteren Position II, in welcher das vordere linke Rad des Kraftfahrzeugs 1 sich auf einer linken Spur 18 der Straße befindet. Der Fahrer fährt weiter in Richtung zur Querparklücke 14 hin. Erreicht das Kraftfahrzeug 1 eine in Fig. 1 dargestellte Position III so erfasst der erste Ultraschallsensor 5 das Kraftfahrzeug 17, welches sich in der Parklücke 15 befindet. Der erste Ultraschallsensor 5 übermittelt Messdaten an die Steuereinrichtung 2, die die jeweils augenblickliche Entfernung des Kraftfahrzeugs 17 vom ersten Ultraschallsensor 5 beinhalten. In der Position III befindet sich das Kraftfahrzeug 17, welches in der Parklücke 13 eingeparkt ist, noch außerhalb des Erfassungsbereichs 11 des zweiten Ultraschallsensors 6. Die Fahrerassistenzeinrichtung greift in die Lenkeinrichtung 4 des Kraftfahrzeugs 1 noch nicht ein.

Im Hintergrund überprüft die Steuereinrichtung 2, und genauer gesagt der Mikrocontroller 3, ob ein vorbestimmtes Aktivierungskriterium erfüllt ist. Dieses kann beinhalten, dass
- sich das Kraftfahrzeugs 1 mit einer Geschwindigkeit keiner 10 km/h nach vorne bewegt und/oder
- die momentane Beschleunigung des Kraftfahrzeugs 1 in einem vorbestimmten Wertebereich liegt, insbesondere kleiner oder gleich Null ist;ein Lenkwinkel der Lenkeinrichtung 4 eine vorbestimmte Lenkwinkeländerung durchläuft, z.B. von 0° auf 40° innerhalb einer vorbestimmten Zeitdauer; und/oderBegrenzungen der Querparklücke 14 in den Erfassungsbereichen 10, 11 der Ultraschallsensoren 5, 6 liegen.Im Ausführungsbeispiel ist die Parklücke 14 einerseits durch eine Seitenflanke 19 des in der Parklücke 13 stehenden Kraftfahrzeugs 17 und andererseits durch eine Seitenflanke 20 des in der Parklücke 15 stehenden Kraftfahrzeugs 17 an zwei sich gegenüber liegenden Seiten unmittelbar begrenzt. Beim Überprüfen des Erfülltseins des Aktivierungskriteriums prüft die Steuereinrichtung 2 also, ob einerseits sich die Seitenflanke 19 im Erfassungsbereich 11 und andererseits sich die Seitenflanke 20 im Erfassungsbereich 10 befindet. In Fig. 1 ist dies noch nicht der Fall, die Seitenflanke 19 befindet sich nämlich noch außerhalb des Erfassungsbereichs 11.

Gelangt das in der Parklücke 13 stehende Kraftfahrzeug 17 in den Erfassungsbereich 11 des zweiten Ultraschallsensors 6, so ist das Aktivierungskriterium erfüllt. Nach Erfülltsein dieses Aktivierungskriteriums sind folgende Szenarien sinnvoll möglich: Die Steuereinrichtung 2 kann ein Informationssignal ausgeben, mit welchem der Fahrer über die Möglichkeit der Aktivierung des Unterstützens beim Durchführen des Parkvorgangs informiert wird. Alternativ kann das Unterstützen des Fahrers automatisch - das heißt unabhängig von dem Fahrer - durch die Steuereinrichtung 2 aktiviert werden. Dann greift die Steuereinrichtung 2 in die Lenkeinrichtung 4 des Kraftfahrzeugs 1 ein. Hier kann der Fahrer durch ein Gegenlenken das Unterstützen durch die Fahrerassistenzeinrichtung deaktivieren. Zusätzlich oder alternativ kann dem Fahrer die Möglichkeit gegeben sein, das Unterstützen mit Hilfe einer Bedieneinrichtung zu deaktivieren.

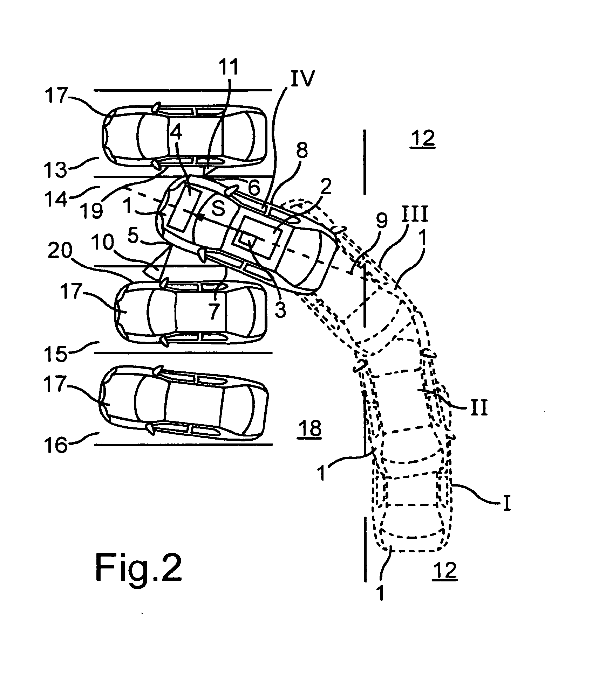

Im Ausführungsbeispiel wird das Unterstützen des Fahrers beim Durchführen des Parkvorgangs also nach Erfülltsein des Aktivierungskriteriums aktiviert - sei es durch den Fahrer oder automatisch durch die Steuereinrichtung 2. In Fig. 2 ist eine weitere Position IV des Kraftfahrzeugs 1 dargestellt, in welcher sich die beiden vorderen Räder bereits in der Querparklücke 14 befinden. Die Seitenflanke 19 des Kraftfahrzeugs 17 befindet sich längst im Erfassungsbereich 11 des zweiten Ultraschallsensors 6. Das Unterstützen durch die Fahrerassistenzeinrichtung ist aktiv. Die Steuereinrichtung 2 bestimmt eine Parkbahn, die durch das Kraftfahrzeug 1 zum Erreichen einer Endposition in der Parklücke 14 zu befahren ist. Im Ausführungsbeispiel wird die Parkbahn durch die Steuereinrichtung 2 kontinuierlich geregelt, nämlich abhängig von den jeweils aktuellen Messwerten der Ultraschallsensoren 5, 6, wie auch unter Berücksichtigung von Messwerten vorheriger Messvorgänge der Ultraschallsensoren 5, 6. Und zwar regelt die Sensoreinrichtung 2 die Parkbahn im Hinblick darauf, dass jegliche Punkte der Mittellängsachse 9 des Kraftfahrzeugs 1 in seiner Endposition in der Parklücke 14 jeweils einen gleichen Abstand zur Seitenflanke 19 sowie zur Seitenflanke 20 der jeweiligen Kraftfahrzeuge 17 aufweisen. Als Regelkriterium kann z.B. ein solches gewählt werden, dass der Abstand des ersten Ultraschallsensors 5 von der Seitenflanke 20 gleich dem Abstand des zweiten Sensors 6 von der Seitenflanke 19 ist.

Also berücksichtigt die Steuereinrichtung 2 auch die Messwerte vorheriger Messvorgänge der Ultraschallsensoren 5, 6. Unter Berücksichtigung der aktuellen Geschwindigkeit des Kraftfahrzeugs 1 kann die Steuereinrichtung 2 somit ausrechnen, wie tief sich das Kraftfahrzeug 1 in der Querparklücke 14 befindet. Es kann somit die Endposition des Kraftfahrzeugs 1 bestimmt werden bzw. das Kraftfahrzeug 1 kann dann gestoppt werden, wenn es sich vollständig in der Parklücke 14 befindet.

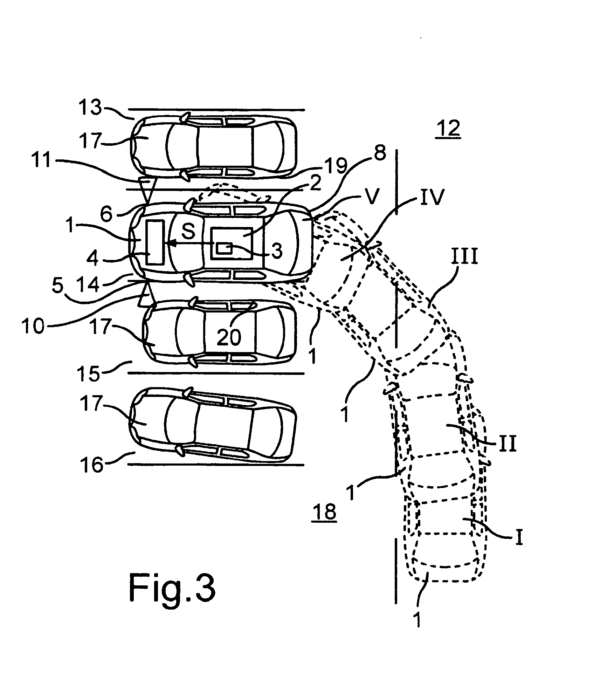

Von der Position IV aus nähert sich das Kraftfahrzeug 1 nach und nach der Endposition in der Parklücke 14. In Fig. 3 ist eine weitere Position V des Kraftfahrzeugs 1 dargestellt, die die Endposition ist. Das Kraftfahrzeug 1 wird gestoppt. Das Kraftfahrzeug 1 befindet sich in der in Fig. 3 dargestellten Position vollständig in der Parklücke 14, nämlich mittig zwischen den in den Parklücken 13, 15 stehenden Kraftfahrzeugen 17. Der Parkvorgang ist beendet.

Es kann auch vorgesehen sein, dass die Fahrerassistenzeinrichtung weitere Sensoren aufweist, die einen vorderen Bereich des Kraftfahrzeugs 1, das heißt einen Bereich vor dem Kraftfahrzeug 1 erfassen. Dann kann die Steuereinrichtung 2 die Parkbahn auch vorab berechnen, nämlich bevor die Erfassungsbereiche 10, 11 der Ultraschallsensoren 5, 6 die Seitenflanken 19, 20 der nebenstehenden Kraftfahrzeuge 17 erreichen.

Die Fahrerassistenzeinrichtung kann den Fahrer auch sinnvoll in solchen Fahrsituationen unterstützen, in denen das Kraftfahrzeug 1 durch jegliche Fahrbahnverengungen gefahren wird. Insbesondere in engen Durchfahrten, wie sie z.B. in Tiefgaragen auftreten, kann das Unterstützen des Fahrers beim Führen des Kraftfahrzeugs 1 aktiviert werden. Dann kann nämlich vorkommen, dass auch ohne eine Parklücke das Aktivierungskriterium erfüllt ist. Erfassen die seitlichen Ultraschallsensoren 5, 6 jeweils ein sich vom Boden erhebendes Objekt, durch welches eine enge Durchfahrt begrenzt ist, so kann die Fahrerassistenzeinrichtung auch in die Lenkeinrichtung 4 eingreifen und dem Fahrer das Lenken des Kraftfahrzeugs 1 abnehmen. Die Steuereinrichtung 2 kann dann eine Fahrbahn regeln, nämlich derart, dass der Abstand zwischen dem ersten Ultraschallsensor 5 und dem von ihm erfassten Objekt gleich dem Abstand zwischen dem zweiten Ultraschallsensor 6 und dem von diesem erfassten Objekt ist. Der Fahrer muss somit nicht selbst das Kraftfahrzeug 1 in engen Durchfahrten führen, er muss lediglich Gas geben und bremsen. Somit wird die Funktionalität der Fahrerassistenzeinrichtung vorteilhaft erweitert.

Die Fahrerassistenzeinrichtung kann auch solche Sensoren aufweisen, die am Boden angebrachte Markierungen erfassen können. Dann kann die Fahrerassistenzeinrichtung auch solche Parklücken erfassen und dem Fahrer auch beim Vorwärtseinparken in solche Parklücken unterstützen, die an zwei sich gegenüber liegenden Seiten jeweils durch einen am Boden angebrachten weißen Streifen unmittelbar begrenzt sind. Das Aktivierungskriterium kann dann ebenfalls beinhalten, dass die am Boden angebrachten Begrenzungen der Parklücke sich im Erfassungsbereich der Fahrerassistenzeinrichtung befinden.

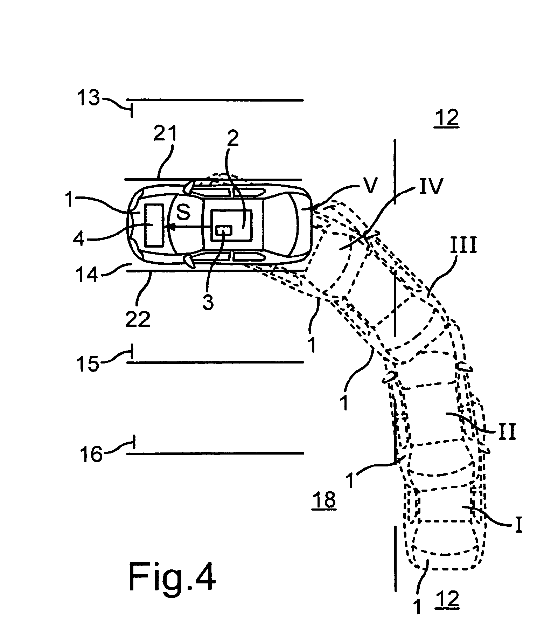

In Fig. 4 ist in schematischer Darstellung ein Parkvorgang gezeigt, in welchem das Kraftfahrzeug 1 vorwärts in eine Querparklücke 14 eingeparkt wird, die lediglich durch zwei am Boden angebrachte Markierungen 21, 22 begrenzt ist. Die benachbarten Parklücken 13, 15, 16 sind leer. Der Parkvorgang erfolgt hier analog zum Parkvorgang gemäß den Fig. 1 bis 3.

Sensoren, die die am Boden angebrachten Markierungen 21, 22 erfassen können, können z.B. optische Sensoren, Kameras und ähnliches sein.

Insgesamt werden also ein Verfahren sowie eine Fahrerassistenzeinrichtung bereitgestellt, mit welchem und durch welche ein Fahrer eines Kraftfahrzeugs 1 beim Vorwärtseinparken in eine Querparklücke unterstützt wird. Die Fahrerassistenzeinrichtung überprüft, ob ein Aktivierungskriterium erfüllt ist oder nicht. Nach Erfülltsein des Aktivierungskriteriums kann das Unterstützen des Fahrers durch die Fahrerassistenzeinrichtung aktiviert werden.

## Patentansprüche

1. Verfahren zum Unterstützen eines Fahrers eines Kraftfahrzeugs (1) beim Einparken in eine Querparklücke (14) mittels einer Fahrerassistenzeinrichtung, wobei Umgebungsbedingungen des Kraftfahrzeugs (1) durch eine Sensoreinrichtung (5, 6) der Fahrerassistenzeinrichtung erfasst werden und eine durch das Kraftfahrzeug (1) zumindest semi-autonom zu befahrene Parkbahn abhängig von den Umgebungsbedingungen durch eine Steuereinrichtung (2) der Fahrerassistenzeinrichtung bestimmt wird,
wobei das Kraftfahrzeug (1) vorwärts in die Querparklücke (14) eingeparkt wird und beim Vorwärtseinparken die bestimmte Parkbahn durchfahren wird und wobei durch die Steuereinrichtung (2) überprüft wird, ob ein vorbestimmtes Aktivierungskriterium zum Starten des zumindest semi-autonomen Parkens erfüllt ist, und das Unterstützen des Fahrers durch die Fahrerassistenzeinrichtung nach Erfülltsein des Aktivierungskriteriums erfolgt,
**dadurch gekennzeichnet, dass**
durch zumindest zwei jeweils an einer Seitenflanke (7, 8) des Kraftfahrzeugs (1), insbesondere in einem vorderen Bereich der Seitenflanke (7, 8), angebrachte Sensoren (5, 6) der Sensoreinrichtung (5, 6) die Umgebungsbedingungen erfasst werden,
wobei das Aktivierungskriterium umfasst, dass sich das Kraftfahrzeug (1) zumindest bereichsweise bereits in der Querparklücke (14) befindet.

2. Verfahren nach Anspruch 1,
**dadurch gekennzeichnet, dass**
die Steuereinrichtung (2) ein Aktivierungssignal von einer durch den Fahrer betätigten Bedieneinrichtung empfängt und nach Empfangen dieses Aktivierungssignals und nach Erfülltsein des Aktivierungskriteriums das Unterstützen des Fahrers durch die Fahrerassistenzeinrichtung erfolgt.

3. Verfahren nach Anspruch 1 oder 2,
**dadurch gekennzeichnet, dass**
ein Informationssignal nach Erfülltsein des Aktivierungskriteriums durch die Steuereinrichtung (2) ausgegeben wird, mittels welchem der Fahrer über die Möglichkeit einer Aktivierung des Unterstützens durch die Fahrerassistenzeinrichtung informiert wird.

4. Verfahren nach Anspruch 1,
**dadurch gekennzeichnet, dass**
nach Erfülltsein des Aktivierungskriteriums das Unterstützen des Fahrers durch die Fahrerassistenzeinrichtung fahrerunabhängig aktiviert wird.

5. Verfahren nach einem der Ansprüche 1 bis 4,
**dadurch gekennzeichnet, dass**
beim Überprüfen des Erfülltseins des Aktivierungskriteriums die erfassten Umgebungsbedingungen und/oder zumindest ein Fahrparameter des Kraftfahrzeugs (1) berücksichtigt wird/werden.

6. Verfahren nach einem der Ansprüche 1 bis 5,
**dadurch gekennzeichnet, dass**
das Aktivierungskriterium umfasst, dass
- der momentane Wert einer Geschwindigkeit des Kraftfahrzeugs (1) als Fahrparameter in einem vorbestimmten Wertebereich, insbesondere unterhalb eines vorbestimmten Grenzwertes, liegt und/oder
- der momentane Wert einer Beschleunigung des Kraftfahrzeugs (1) als Fahrparameter in einem vorbestimmten Wertebereich, insbesondere unterhalb eines vorbestimmten Grenzwertes, liegt und/oder
- ein Lenkwinkel einer Lenkeinrichtung (4) des Kraftfahrzeugs (1) als Fahrparameter eine vorbestimmte Lenkwinkeländerung durchläuft und/oder der momentane Lenkwinkelwert in einem vorbestimmten Lenkwinkelbereich liegt.

7. Verfahren nach einem der Ansprüche 1 bis 6,
**dadurch gekennzeichnet, dass**
die Querparklücke (14) an zwei sich gegenüberliegenden Seiten jeweils durch eine Begrenzung (19, 20, 21, 22) unmittelbar begrenzt ist und das Aktivierungskriterium umfasst, dass zumindest eine der Begrenzungen (19, 20, 21, 22) der Querparklücke (14) durch die Sensoreinrichtung (5, 6) erfasst wird.

8. Verfahren nach einem der Ansprüche 1 bis 7,
**dadurch gekennzeichnet, dass**
das Aktivierungskriterium umfasst, dass sich beim Vorwärtseinparken, insbesondere zu Beginn des Vorwärtseinparkens, das Kraftfahrzeug (1) durch den Fahrer gesteuert in Richtung zur Querparklücke (14) hin bewegt und/oder sich in einem Abstand kleiner als ein vorbestimmter Abstandwert von der Querparklücke (14) befindet.

9. Verfahren nach einem der Ansprüche 1 bis 8,
**dadurch gekennzeichnet, dass**
das Kraftfahrzeug (1) bereits vollständig in der Parklücke eingeparkt ist, wobei der Fahrer durch die Fahrerassistenzeinrichtung beim Vornehmen einer Korrektur der Position des Kraftfahrzeugs (1) in der Querparklücke (14) unterstützt wird.

10. Verfahren nach einem der vorhergehenden Ansprüche,
**dadurch gekennzeichnet, dass**
die Begrenzungen (19, 20, 21, 22) der Querparklücke (14) an einem Boden angebrachte Markierungen (21, 22) oder neben der Querparklücke (14) stehende Objekte (19, 20) sind und durch die Sensoreinrichtung (5, 6) erfasst werden.

11. Verfahren nach einem der vorhergehenden Ansprüche,
**dadurch gekennzeichnet, dass**
das Erfassen der Umgebungsbedingungen umfasst, dass eine Position der Begrenzungen (19, 20, 21, 22) der Querparklücke (14) relativ zum Kraftfahrzeug (1) und/oder zumindest eine Abmessung der Querparklücke (14) erfasst wird/werden.

12. Verfahren nach einem der vorhergehenden Ansprüche,
**dadurch gekennzeichnet, dass**
die Parkbahn derart bestimmt wird, dass in einer Endposition des Kraftfahrzeugs (1) in der Querparklücke (14) zumindest ein vorbestimmter Punkt, insbesondere jegliche Punkte, einer in Fahrzeuglängsrichtung zentral verlaufenden Mittellängsachse des Kraftfahrzeugs (1) einen gleichen Abstand zu den Begrenzungen (19, 20, 21, 22) aufweist/aufweisen.

13. Verfahren nach einem der vorhergehenden Ansprüche,
**dadurch gekennzeichnet, dass**
das Bestimmen der Parkbahn umfasst, dass zumindest während einer vorbestimmten Zeitdauer während des Parkvorgangs die Parkbahn durch die Steuereinrichtung (2) geregelt wird.

14. Verfahren nach einem der vorhergehenden Ansprüche,
**dadurch gekennzeichnet, dass**
das Bestimmen der Parkbahn umfasst, dass zumindest ein Abschnitt der Parkbahn vorab bestimmt wird, wobei bevorzugt die Länge dieses Abschnittes von einem Erfassungsbereich (10, 11) der Sensoreinrichtung (5, 6) abhängt.

15. Verfahren nach einem der vorhergehenden Ansprüche,
**dadurch gekennzeichnet, dass**
beim Bestimmen der Parkbahn, insbesondere bei einer Regelung derselben, die jeweils momentanen Messwerte der Sensoreinrichtung (5, 6) und die Messwerte vorheriger Messvorgänge berücksichtigt werden.

## Claims

1. Method for assisting a driver of a motor vehicle (1) when parking in a perpendicular parking space (14) by means of a driver assistance device, wherein the conditions of the surroundings of the motor vehicle (1) are detected by means of a sensor device (5, 6) in the driver assistance device, and a parking path which is to be travelled along at least semi-autonomously by the motor vehicle (1) is determined as a function of the conditions of the surroundings by a control device (2) of the driver assistance device,
wherein the motor vehicle (1) is parked forwards into the perpendicular parking space (14), and will pass through the specific parking path during the forward parking,
and wherein the control device (2) checks whether a predetermined activation criterion for the starting of the at least semi-autonomous parking is satisfied, and the assistance is provided to the driver by the driver assistance device after the activation criterion has been satisfied,
**characterized in that**
sensors (5, 6) of the sensor device (5, 6) which are each mounted on a side edge (7, 8) of the motor vehicle (1), in particular in a front area of the side edge (7, 8), detects the conditions of the surroundings,
wherein the activation criterion comprises the motor vehicle (1) being already located, at least partially, in the perpendicular parking space (14).

2. Method according to Claim 1,
**characterized**
**in that** the control device (2) receives an activation signal from an operator control device which is activated by the driver, and after the reception of this activation signal and after the activation criterion is satisfied the driver is supported by the driver assistance device.

3. Method according to Claim 1 or 2,
**characterized in that**
an information signal is output after the activation criterion is satisfied by the control device (2), by means of which activation criterion the driver is informed about the possibility of activating the assistance by the driver assistance device.

4. Method according to Claim 1,
**characterized in that**
after the activation criterion is satisfied, assistance of the driver by the driver assistance device is activated independently of the driver.

5. Method according to one of Claims 1 to 4, **characterized in that**
when the satisfaction of the activation criterion is checked, the detected conditions of the surroundings and/or at least one driving parameter of the motor vehicle (1) are/is taken into account.

6. Method according to one of Claims 1 to 5, **characterized in that**
the activation criterion comprises the fact that
- the instantaneous value of a speed of the motor vehicle (1) lies as a driving parameter in a predetermined value range, in particular below a predetermined limiting value, and/or
- the instantaneous value of an acceleration of the motor vehicle (1) as a driving parameter lies in a predetermined value range, in particular below a predetermined limiting value, and/or
- a steering angle of a steering device (4) of the motor vehicle (1) as a driving parameter passes through a predetermined change in steering angle and/or the instantaneous steering angle value lies in a predetermined steering angle range.

7. Method according to one of Claims 1 to 6, **characterized in that** the perpendicular parking space (14) is bounded indirectly on two sides lying opposite one another by a boundary (19, 20, 21, 22) in each case, and the activation criterion comprises the fact that at least one of the boundaries (19, 20, 21, 22) of the perpendicular parking space (14) is detected by the sensor device (5, 6).

8. Method according to one of Claims 1 to 7, **characterized in that**
the activation criterion comprises the fact that during forward parking, in particular at the start of the forward parking, the motor vehicle (1) moves under the control of the driver in the direction of the perpendicular parking space (14), and/or is located at a distance from the perpendicular parking space (14) which is shorter than a predetermined distance value.

9. Method according to one of Claims 1 to 8, **characterized in that**
the motor vehicle (1) is already completely parked in the parking space, wherein the driver is assisted by the driver assistance device in performing a correction of the position of the motor vehicle (1) in the perpendicular parking space (14).

10. Method according to one of the preceding claims, **characterized in that**
the boundaries (19, 20, 21, 22) of the perpendicular parking space (14) are marks (21, 22) which are made on the ground or objects (19, 20) which are located next to the perpendicular parking space (14), and said marks (21, 22) or objects (19, 20) are detected by the sensor device (5, 6).

11. Method according to one of the preceding claims, **characterized in that**
the detection of the conditions of the surroundings comprises the fact that a position of the boundaries (19, 20, 21, 22) of the perpendicular parking space (14) relative to the motor vehicle (1) and/or at least a dimension of the perpendicular parking space (14) is/are detected.

12. Method according to one of the preceding claims, **characterized in that**
the parking path is determined in such a way that in an end position of the motor vehicle (1) in the perpendicular parking space (14) at least one predetermined point, in particular any points, on a central longitudinal axis of the motor vehicle (1) running centrally in the longitudinal direction of the vehicle, is/are at the same distance from the boundaries (19, 20, 21, 22).

13. Method according to one of the preceding claims, **characterized in that**
the determination of the parking path comprises the fact that at least during a predetermined time period during the parking process the parking path is regulated by the control device (2).

14. Method according to one of the preceding claims, **characterized in that**
the determination of the parking path comprises the fact that at least one section of the parking path is determined in advance, wherein the length of this
section preferably depends on a detection range (10, 11) of the sensor device (5, 6).

15. Method according to one of the preceding claims, **characterized in that**
during the determination of the parking path, in particular during a process of regulating said parking path, the respective instantaneous measured values of the sensor device (5, 6) and the measured values of previous measuring processes are taken into account.

## Revendications

1. Procédé d'assistance du conducteur d'un véhicule automobile (1) lors du stationnement dans une place de stationnement oblique (14) à l'aide d'un dispositif d'assistance du conducteur, les conditions environnementales du véhicule automobile (1) étant détectées par un dispositif de détection (5, 6) du dispositif d'assistance du conducteur et une trajectoire de stationnement à parcourir par le véhicule automobile (1) étant définie de façon au moins semi-automatique en fonction des conditions environnementales par le biais d'un dispositif de commande (2) du dispositif d'assistance du conducteur ; le véhicule automobile (1) étant garé en avant dans la place de stationnement oblique (14) et la trajectoire de stationnement définie étant parcourue lors du stationnement en avant ; et
le dispositif de commande (2) permettant de contrôler si un critère d'activation prédéfini est rempli pour lancer le stationnement au moins semi-automatique et l'assistance du conducteur par le dispositif d'assistance du conducteur se produisant une fois le critère d'activation rempli ;
**caractérisé en ce que** :
les conditions environnementales sont détectées par le biais d'au moins deux capteurs (5, 6) du dispositif de détection (5, 6) respectivement disposés au niveau d'un flanc latéral (7, 8) du véhicule automobile (1), notamment dans une région avant du flanc latéral (7, 8) ;
le critère d'activation comprenant que le véhicule automobile (1) se trouve au moins déjà en partie dans la place de stationnement oblique (14).

2. Procédé selon la revendication 1, **caractérisé en ce que** le dispositif de commande (2) reçoit un signal d'activation provenant d'un dispositif de commande actionné par le conducteur et que l'assistance du conducteur par le dispositif d'assistance du conducteur se produit après réception de ce signal d'activation et après remplissage de ce critère d'activation.

3. Procédé selon la revendication 1 ou 2, **caractérisé en ce qu'**un signal d'information est émis après remplissage du critère d'activation par le dispositif de commande (2), ledit signal servant à informer le conducteur de la possibilité d'une activation de l'assistance par le dispositif d'assistance du conducteur.

4. Procédé selon la revendication 1, **caractérisé en ce qu'**après remplissage du critère d'activation, l'assistance du conducteur par le dispositif d'assistance du conducteur est activée indépendamment du conducteur.

5. Procédé selon l'une quelconque des revendications 1 à 4, **caractérisé en ce que** les conditions environnementales détectées et/ou au moins un paramètre de conduite du véhicule automobile (1) est/sont pris en compte lors du contrôle du remplissage du critère d'activation.

6. Procédé selon l'une quelconque des revendications 1 à 5, **caractérisé en ce que** le critère d'activation comprend :
- la présence d'une valeur momentanée d'une vitesse du véhicule automobile (1) en tant que paramètre de conduite située dans une plage de valeurs prédéfinie, notamment en dessous d'une valeur limite prédéfinie ; et/ou
- la présence de la valeur momentanée d'une accélération du véhicule automobile (1) en tant que paramètre de conduite située dans une plage de valeurs prédéfinie, notamment en dessous d'une valeur limite prédéfinie ; et/ou
- la réalisation, par un angle de braquage d'un dispositif de direction (4) du véhicule automobile (1) en tant que paramètre de conduite, d'un changement d'angle de braquage prédéfini et/ou la présence d'une valeur d'angle de braquage momentanée se trouvant dans une plage d'angle de braquage prédéfinie.

7. Procédé selon l'une quelconque des revendications 1 à 6, **caractérisé en ce que** la place de stationnement oblique (14) est respectivement directement délimitée, au niveau des deux côtés opposés, par une délimitation (19, 20, 21, 22) et le critère d'activation comprenant qu'au moins une des délimitations (19, 20, 21, 22) de la place de stationnement oblique (14) est détectée par le dispositif de détection (5, 6).

8. Procédé selon l'une quelconque des revendications 1 à 7, **caractérisé en ce que** le critère d'activation comprend que lors du stationnement en avant, notamment au début du stationnement en avant, le véhicule automobile (1) soit déplacé par le conducteur de façon commandée en direction de la place de stationnement oblique (14) et/ou se trouve à une distance inférieure à une valeur d'écartement prédéfinie par rapport à la place de stationnement oblique (14).

9. Procédé selon l'une quelconque des revendications 1 à 8, **caractérisé en ce que** le véhicule automobile (1) est déjà entièrement garé dans la place de stationnement lorsque le conducteur est assisté par le dispositif d'assistance du conducteur pour effectuer une correction de la position du véhicule automobile (1) dans la place de stationnement oblique (14).

10. Procédé selon l'une quelconque des revendications précédentes, **caractérisé en ce que** les délimitations (19, 20, 21, 22) de la place de stationnement oblique (14) sont des marquages (21, 22) disposés au sol ou des objets (19, 20) disposés à côté de la place de stationnement oblique (14) et sont détectées par le dispositif de détection (5, 6).

11. Procédé selon l'une quelconque des revendications précédentes, **caractérisé en ce que** la détection des conditions environnementales comprend la détection d'une position des délimitations (19, 20, 21, 22) de la place de stationnement oblique (14) par rapport au véhicule automobile (1) et/ou d'au moins une dimension de la place de stationnement oblique (14).

12. Procédé selon l'une quelconque des revendications précédentes, **caractérisé en ce que** la trajectoire de stationnement est définie de telle sorte que dans une position d'extrémité du véhicule automobile (1) dans la place de stationnement oblique (14), au moins un point prédéfini, notamment les points d'un axe central longitudinal du véhicule automobile (1) s'étendant centralement dans la direction longitudinale du véhicule, présente/présentent une certaine distance par rapport aux délimitations (19, 20, 21, 22).

13. Procédé selon l'une quelconque des revendications précédentes, **caractérisé en ce que** la détermination de la trajectoire de stationnement comprend qu'au moins pendant une durée prédéfinie pendant le processus de stationnement, la trajectoire de stationnement soit réglée par le dispositif de commande (2).

14. Procédé selon l'une quelconque des revendications précédentes, **caractérisé en ce que** la détermination de la trajectoire de stationnement comprend qu'au moins une section de la trajectoire de stationnement soit définie à l'avance, la longueur de cette section dépendant de façon préférée de la zone de détection (10, 11) du dispositif de détection (5, 6).

15. Procédé selon l'une quelconque des revendications précédentes, **caractérisé en ce que** lors de la détermination de la trajectoire de stationnement, notamment en cas de réglage de celle-ci, les valeurs de mesure actuelles du dispositif de détection (5, 6) ainsi que les valeurs de mesure des processus de mesure précédents sont respectivement prises en compte.
